**Europäisches Patentamt**

**European Patent Office**

**Office européen des brevets**

(11) Publication number : **0 428 232 B1**

(12) **EUROPEAN PATENT SPECIFICATION**

(45) Date of publication of patent specification :
20.10.93 Bulletin 93/42

(51) Int. Cl.⁵ : **A23C 9/154, A23L 1/0522**

(21) Application number : **90203020.4**

(22) Date of filing : **14.11.90**

(54) **A process for batchwise preparing a liquid having increased viscosity on the basis of milk.**

(30) Priority : **15.11.89 NL 8902822**

(43) Date of publication of application :
**22.05.91 Bulletin 91/21**

(45) Publication of the grant of the patent :
**20.10.93 Bulletin 93/42**

(84) Designated Contracting States :
**BE DE ES FR GB IT NL**

(56) References cited :
**EP-A- 0 032 296**
**FR-A- 1 138 924**
**FR-A- 1 517 604**
**US-A- 4 801 470**
**US-A- 4 871 398**

(56) References cited :
**FOOD SCIENCE & TECHNOLOGY AB-STRACTS, no 72-09-P1284 (72047604); E.J. SORENSEN: "VLA - a milk product of supris-ing possibilities"**

(73) Proprietor : **Verenigde Coöperatieve Melkindustrie Coberco B.A.**
**Nieuwstad 69**
**NL-7201 NM Zutphen (NL)**

(72) Inventor : **Heuvelman, Lambertus**
**Tasveldweg 2**
**NL-7462 DR Rijssen (NL)**

(74) Representative : **Smulders, Theodorus A.H.J., Ir. et al**
**Vereenigde Octrooibureaux Nieuwe Parklaan 97**
**NL-2587 BN 's-Gravenhage (NL)**

## Description

The present invention relates to a process for batchwise preparing a liquid having increased viscosity on the basis of milk, which comprises adding starch, flavors, pH affecting substances, sugar and other conventional substances to milk, heating the resulting mixture with stirring to a temperature of 75-85°C and cooling it.

The present invention particularly relates to the preparation of a custard.

Custard is a dairy product which is being prepared at present on a large technical scale, and which, in view of the acceptation by the consumer, must satisfy a number of stringent requirements. Thus a good custard must be pourable, that is to say it may not be gelled and that no gelled lumps or the like may occur either. Furthermore, its appearance must be smooth and glossy; a low-grade custard has a rough appearance, e.g., like that of apple-sauce.

The viscosity of high-grade custard must have a certain value (Posthumus outflow time of 20-30 seconds or a viscosity of 2 to 3 Pa.s, as determined with a rotation viscosimeter at a shear rate of 10 s$^{-1}$). Unduly thick custard is too pasty, and unduly thin custard gives too little "mouth feel". Consequently, it is of great importance that the viscosity be constant at the time phase between production and consumption (shelf life).

Finally, and this is a very important condition, a custard may not show serum separation (whey separation), nor after storage for a certain period of time.

Although - considered by itself - the preparation of custard on a technical scale is not particularly complicated, it proves to be very difficult in practice to maintain the above parameters determining the quality. Research has shown that especially the nature of the starch to be used is decisive of the quality of the resulting custard.

It is known (see: J.K. Eikelenboom ; Voeding + Technick $\underline{3}$ (1969), 1022-1027 and A.G.J. Arentzen ; Nizo-Mienws (1969 > No. 7) to prepare custard, both in the continuous and in the batchwise process, by using chemically modified starch, that is to say starch having esters, such as esters of adipic acid or acetic acid, applied to its granules in order to impart a better stability, especially heat stability to it and to render it less susceptible to shear forces. By using thus modified starch a custard can be prepared which meets the above quality requirements. In practice, the use of this chemically modified starch is open to great objections, because the consumer increasingly asks for "naturally pure" products.

It is also known to prepare custard, particularly in the batchwise production, by using non-chemically modified starch. By non-chemically modified or native starch is meant the substance as occurring in different grains and tubers, e.g., maize, potato and rice. In general, this starch is purified by a physical process. Besides, non-chemically modified starch also comprises starch that has been subjected to a physical or enzymatic process and, for instance, has been rendered cold soluble by roller drying.

The use of the above starch in custard results in the occurrence of serum separation and gelling in the prepared custard, while the viscosity upon storage is not constant and decreases, so that an unacceptable viscosity reduction occurs during shelf life of the custard.

Research has shown that even when using combinations of high-grade starches (waxy maize, special type of rice starch) the above problems cannot be solved . Thus the use of a larger amount of waxy maize in a starch combination leads to a decreased whey separation indeed, but the degree of gelling increases and, moreover, the thus prepared custard turns elastic.

Furthermore, French patent 1,517,604 describes a process for preparing pregelatinized starch in which the granular form is maintained. The product described, which is roller dried, is very coarse. The structure of the thus prepared products is pulpy, fibrous and granular.

The object underlying the present invention is to prepare a custard, or the like, which meets the above quality requirements in very respect, and in which no use is made of a chemically modified starch.

Surprisingly, it has been found that such a custard can be prepared by using as starch a non-chemically modified starch in which the natural granular form is still present, and the microscopic image of which, in polarized light, does not show the cross characteristic of starch. This starch can be obtained by gelatinizing natural starch and drying the resulting gelatinized starch granules without damaging the starch granules.

In the process according to the present invention there is preferably used a starch obtained by suspending natural starch in water and atomizing this slurry with simultaneous steam injection, thereby injecting such an amount of steam into the slurry and maintaining such a contact time between the slurry and the steam that gelatinization has occurred in the atomized mixture.

In the process according to the present invention there may be very suitably used a starch prepared as described in U.S. patent 4,280,851.

U.S. patent 4,871,398 describes agglomerates of gelatinized starch granules which are particularly suitable for use in instant products. These agglomerates are obtained by deliberately contacting starch slurry sprays with each other, which is not done in the first-mentioned U.S. patent in the name of the same company. After disintegration of these agglomerates they might be applicable to the process according to the present invention.

Although the present invention particularly relates to the preparation of custard, it is likewise applicable to the preparation of other thickened milk products, such as sauces and the like.

The present invention will now be illustrated by the following examples.

Example I

Two charges of 2000 l custard having a composition (in % by weight) as given in Table A were prepared successively in a 3000 l vessel.

For the preparation of the custard, milk was standardized (3% fat), pasteurized (20 s, 92°C), and cooled. Subsequently, the other constituents as listed in Table A were added to the cold milk with stirring.

Then the mixture was heated to a temperature of 80°C with stirring, within a period of time of 2.5 hours.

After the thus obtained mixture had been kept at this temperature for 30 minutes, it was cooled to a temperature of 8°C using a tube or plate heat exchanger.

Finally, the resulting product was drawn off into nonreturnable packages.

## Table A

### Composition

| | |
|---|---|
| milk 3% fat | 89.92 % |
| sugar | 6.00 % |
| carrageen | 0.01 % |
| locust bean flour | 0.05 % |
| colorant | 0.01 % |
| aroma | 0.01 % |
| starch according to the present invention | 4 % |
| | 100 % |

In the following Table B, the results of the evaluation of the custard after one and after 10 days of storage at 5°C will be given:

## Table B

### After one day

|  |  | charge 1 | charge 2 |
|---|---|---|---|
| Visual | thickness | good | good |
|  | appearance | a little rough | nearly smooth |
|  | structure | good | good |
| Outflow time (Posthumus) |  | 23 s | 26 s |

### After 10 days

|  |  |  | charge 1 | charge 2 |
|---|---|---|---|---|
| Visual | thickness | } |  | } |
|  | appearance | } | like fresh | } like fresh |
|  | structure | } |  | } |
|  | serum |  | none | none |
| Outflow time (Posthumus) |  |  | 20 s | 22 s |

### Comparative Example I

Two charges of custard having the compositions given in Table C were prepared using the process as illustrated by Example I, but with heating of the mixture to a temperature of 90°C:

## Table C

|  | charge 1 | charge 2 |
|---|---|---|
| milk (3% fat) | 89.72 | 89.72 |
| sugar | 6.00 | 6.00 |
| native maize starch | 3.9 | - |
| native waxy maize starch | 0.3 | - |
| carrageen | 0.01 | 0.01 |
| locust bean flour | 0.05 | 0.05 |
| colorant | 0.01 | 0.01 |
| aroma | 0.01 | 0.01 |
| Veramil 03845 (TM) * | - | 4.20 |

*Veramil 03845 is a starch supplied by Cerestar.

In Table D, the results of the evaluation of the custard after one and after 10 days of storage at 5°C will be given:

### Table D

**After one day**

| | | charge 1 | charge 2 |
|---|---|---|---|
| Visual | thickness | good | good |
| | appearance | rough | rough |
| | structure | a few lumps | a few gelled lumps |
| Outflow time (Posthumus) | | 19 s | 20 s |

**After 10 days**

| | | charge 1 | charge 2 |
|---|---|---|---|
| Visual | thickness | much too thin | too thin |
| | appearance | very rough | rough |
| | structure | not coherent, lumps | lumps |
| | coarse | | |
| | serum | 3/4 cm product not homogeneous | 1/4 cm |
| Outflow time (Posthumus) | | 9 s | 10 s |

Comparative Example II

The process was carried out in a manner similar to the manner described in Comparative Example I, but now a combination was used as given in Table E:

### Table E

| | |
|---|---|
| milk (3% fat) | 89.32 % |
| sugar | 6.00 % |
| waxy maize | 0.20 % |
| carrageen | 0.01 % |
| locust bean flour | 0.05 % |
| colorant | 0.01 % |
| flavor | 0.01 % |
| waxy rice starch | 1.0 % |
| native maize starch | 3.4, % |

In Table F, the results of the evaluation of the custard after one and after 10 days at 5°C will be given:

## Table F

After one day

| Visual | thickness | good |
|---|---|---|
| | appearance | rough |
| | structure | rather strongly gelled |
| Outflow time (Posthumus) | | 28 s |

After 10 days

| Visual | thickness | good |
|---|---|---|
| | appearance | very rough |
| | structure | gelled; gelled lumps |
| | serum | none |
| Outflow time (Posthumus) | | 18 s |

Comparative Example III

The process was carried out in a manner similar to the manner described in Example I, but now a so-called instant maize starch (dried on a roller) was used as given in Table G:

## Table G

| milk (3% fat) | 89.42 % |
|---|---|
| sugar | 6.00 % |
| carrageen | 0.01 % |
| locust bean flour | 0.05 % |
| colorant | 0.01 % |
| aroma | 0.01 % |
| instant maize starch* | 4.5 % |

*Merigel R (TM, Amylum)

In Table H, the results of the evaluation of the custard after one and after 10 days of storage at 5°C will be given:

6

EP 0 428 232 B1

## Table H

### After one day

```
Visual    thickness                        good
          appearance                       rough
          structure                        gelled
Outflow time (Posthumus)                   28 s
```

### After 10 days

```
Visual    thickness                        good
          appearance                       very rough
          structure                        thick gelled lumps
          serum                            a little
Outflow time (Posthumus)                   24 s
```

### Discussion of the results

A comparison of Example I with the comparative examples teaches that the use of the process according to the present invention gives surprisingly better results than the use of unmodified starches known for the preparation of custard.

This applies both to the freshly prepared custard and to the custard stored for a certain period time.

It is remarkable that when known starches are used little difference is found in the results obtained (rough, strongly gelled custard), nor are there significant differences in the use of (combination of) native starches or so-called instant starch, although in the latter case the viscosity remains at an acceptable value.

## Claims

1. A process for batchwise preparing a liquid having increased viscosity on the basis of milk, which comprises adding starch, flavors, pH affecting substances, sugar and other conventional substances to milk, heating the resulting mixture with stirring to a temperature of 75-85°C and cooling it, characterized by using as starch a non-chemically modified starch in which the natural granular form is still present, and the microscopic image of which, in polarized light, does not show the cross characteristic of starch.

2. A process according to claim 1, characterized in that the starch is obtained by gelatinizing natural starch and drying the resulting gelatinized starch granules without damaging the starch granules.

3. A process according to claim 2, characterized in that the starch is prepared by suspending natural starch in water and atomizing this slurry with simultaneous steam injection, thereby injecting such an amount of steam into the slurry and maintaining such a contact time between the slurry and the steam that gelatinization has occurred in the atomized mixture.

4. A process according to claim 1, characterized by preparing a custard.

## Patentansprüche

1. Verfahren zur diskontinuierlichen Herstellung einer Flüssigkeit mit erhöhter Viskosität auf der Basis von Milch, umfassend das Zufügen von Stärke, Geschmacksstoffen, pH-beeinflussenden Substanzen, Zucker und anderen üblichen Substanzen zu Milch, das Erwärmen der resultierenden Mischung unter Rühren auf eine Temperatur von 75 bis 85 °C und das Abkühlen derselben, **dadurch ge- kennzeichnet,**

7

daß als Stärke eine nicht-chemisch modifizierte Stärke verwendet wird, in welcher die natürliche körnige Form noch vorhanden ist und deren mikroskopisches Bild in polarisiertem Licht nicht die Quercharakteristik von Stärke zeigt.

2. Verfahren nach Anspruch 1, **dadurch gekennzeichnet**, daß die Stärke erhalten ist durch Gelatinieren natürlicher Stärke und Trocknen der resultierenden gelatinierten Stärkekörner ohne Beschädigung der Stärkekörner.

3. Verfahren nach Anspruch 2, **dadurch gekennzeichnet**, daß die Stärke hergestellt ist durch Suspendieren natürlicher Stärke in Wasser und Zerstäuben dieser Aufschlämmung mit gleichzeitiger Dampfinjektion, wobei eine solche Dampfmenge in die Aufschlämmung injiziert und eine solche Kontaktzeit zwischen der Aufschlämmung und dem Dampf eingehalten wird, daß die Gelatinierung in der zerstäubten Mischung eingetreten ist.

4. Verfahren nach Anspruch 1, **gekennzeichnet durch** die Herstellung einer Puddingspeise.


**Revendications**

1. Procédé de préparation en discontinu d'un liquide à base de lait présentant une viscosité accrue, lequel procédé consiste à ajouter au lait de l'amidon, des arômes, des substances agissant sur le pH, ainsi que du sucre et d'autres substances classiques, puis à chauffer sous agitation le mélange obtenu à une température comprise entre 75 et 85 °C avant de le refroidir, caractérisé en ce qu'il utilise un amidon non modifié chimiquement dans lequel la forme granulaire naturelle est conservée, et dont l'image microscopique, à la lumière polarisée ne présente pas les caractéristiques réticulées de l'amidon.

2. Procédé selon la revendication 1, caractérisé en ce que l'amidon est obtenu par gélatinisation d'amidon naturel et séchage des granulés d'amidon gélatinisés obtenus sans endommager lesdits granulés d'amidon.

3. Procédé selon la revendication 2, caractérisé en ce que l'amidon est préparé par mise en suspension de l'amidon naturel dans de l'eau et par atomisation de cet empois sous injection simultanée de vapeur, en injectant une quantité de vapeur telle dans l'empois et en maintenant en contact l'empois et la vapeur pendant un laps de temps tel que le mélange atomisé se gélatinise.

4. Procédé selon la revendication 1, caractérisé en ce qu'il sert à préparer une crème anglaise.